Europäisches Patentamt

European Patent Office

Office européen des brevets

(11) Veröffentlichungsnummer: **0 208 879**
A1

## (12) EUROPÄISCHE PATENTANMELDUNG

(21) Anmeldenummer: 86107080.3

(22) Anmeldetag: 24.05.86

(51) Int. Cl.⁴: **F 04 D 15/02**, G 01 K 13/08

(30) Priorität: 13.07.85 DE 3525156

(43) Veröffentlichungstag der Anmeldung: 21.01.87
Patentblatt 87/4

(84) Benannte Vertragsstaaten: AT BE CH DE FR GB IT LI LU
NL SE

(71) Anmelder: Klein, Schanzlin & Becker
Aktiengesellschaft, Johann-Klein-Strasse 9,
D-6710 Frankenthal (DE)

(72) Erfinder: Schmidt, Christian, Feldstrasse 6,
D-2887 Elsfleth/Weser (DE)

(54) **Kreiselpumpenaggregat.**

(57) Die Erfindung betrifft ein Kreiselpumpenaggregat, innerhalb dessen eine Sensorleitung (14) die Dichtung und/oder Lagerstellen (5, 6, 8, 9) miteinander verbindet. Diese einzige Sensorleitung liefert eine Aussage über den Betriebszustand des gesamten Aggregates.

EP 0 208 879 A1

Kreiselpumpenaggregat

Die Erfindung betrifft ein Kreiselpumpenaggregat gemäß dem Oberbegriff des Hauptanspruches.

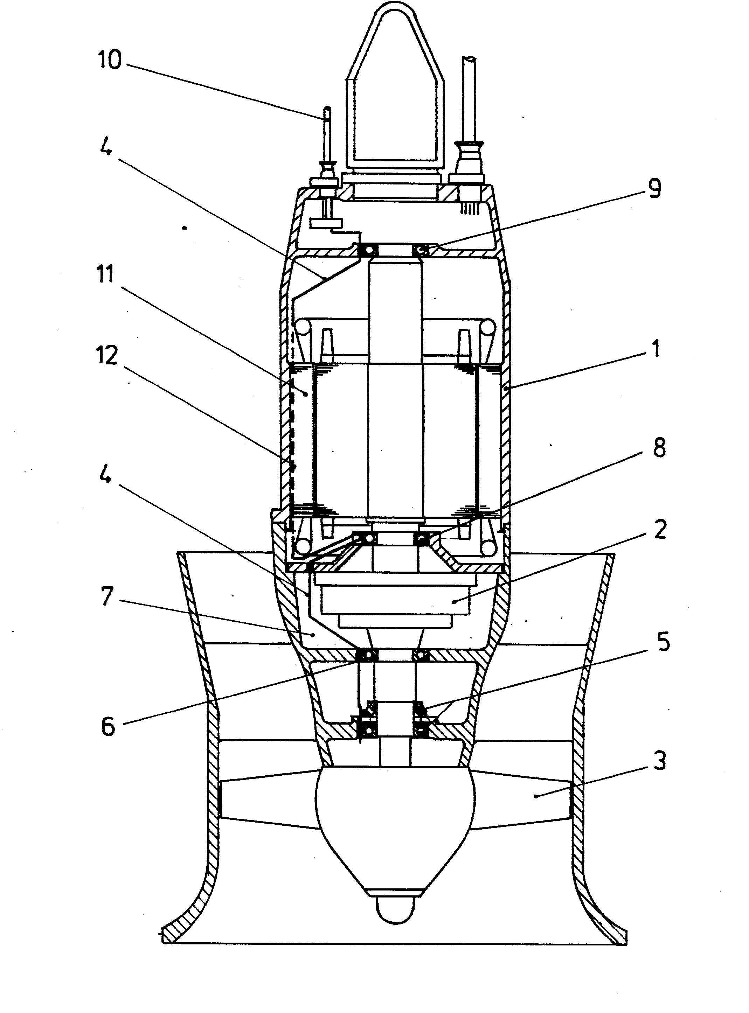

Derartige Kreiselpumpenaggregate weisen die unterschiedlichsten Einrichtungen zur Überwachung des Betriebszustandes auf. So ist z. B. in der Zeitschrift "Chemietechnik", Nr. 12, vom Dezember 1982, in dem Aufsatz "Pumpen für die Biotechnologie", in Abb. 3 eine Pumpe dargestellt, die mit Sonden für Temperatur- und Leitfähigkeit sowie mit einer Leckagesonde versehen ist. Jede Sonde erfordert eine eigene Verkabelung. Entsprechend ähnliche Einrichtungen sind für die Temperatur-überwachung an Lagerstellen bekannt. Die Meßwerte dieser Sonden werden mittels bekannter Anzeigeeinrichtungen kenntlich gemacht.

Der Erfindung liegt die Aufgabe zugrunde, eine einfache Überwachungseinrichtung zu entwickeln, die in zuverlässiger Weise eine Aussage über die jeweiligen Betriebszustände liefern kann. Die Lösung dieser Aufgabe erfolgt gemäß dem kennzeichnenden Teil des Hauptanspruches. Die bisher Verwendung findenden Alarm- oder Überwachungseinrichtungen erfordern entsprechende Sensoren und Verbindungsleitungen in den jeweils gefährdenden Bereichen. Anhand der dann erfolgenden Meldung wird der Betreiber in die Lage versetzt, zu erkennen, an welcher Stelle mit was für einer Störung zu rechnen ist. Die Erfindung geht demgegenüber von der Erkenntnis aus, daß bei einem Kreiselpumpenaggregat die Art und Weise der Störungsmeldung unbedeutend ist. Wesentlicher ist die Tatsache, daß ein Kreiselpumpenaggregat durch jede Störung im Bereich der Lagerstellen und der Wellendichtungen in seiner Funktion gefährdet ist. Durch Verwendung eines an sich bekannten Sensordrahtes und die Verbindung der gefährdeten Bauteile mit Hilfe des Sensordrahtes wird in einfachster Weise die Möglichkeit zur Betriebsüberwachung geschaffen. Denn wenn auch nur ein einziges Lager eines Kreiselpumpenaggregates infolge eines Schadens eine höhere Temperatur aufweist, dann ist damit das gesamte Kreiselpumpenaggregat bezüglich seiner Funktion gefährdet. Die Kenntnis dieses einen Lagerschadens genügt, das gesamte Aggregat auszubauen. Weiterhin bedingt die Kenntnis von einem Schaden im Bereich einer Dichtung und eines damit verbundenen Feuchtigkeitseintrittes die Gewissheit, daß in absehbarer Zeit mit einem größeren Folgeschaden zu rechnen wäre. Demzufolge wird beim Erkennen einer Leckage das Kreiselpumpenaggregat aus seiner Einbaulage entfernt und überholt. Besonders vorteilhaft ist diese Überwachungseinrichtung bei schwer zugänglichen Kreiselpumpenaggregaten, z. B. Unterwassermotorpumpen, Tauchmotorpumpen oder ähnliche.

Eine Ausgestaltung der Erfindung sieht vor, daß im Bereich heißer Zonen die Sensorleitung durch ein isoliertes Kabel ersetzt ist. Damit wird ausgeschlossen, daß die Sensorleitung beim Passieren heißer Zonen anspricht. Beispielsweise würde bei elektrischen Antriebsmotoren im Bereich des Stators die Gefahr bestehen, daß dort infolge der elektrischen Verlustleistung eine höhere Temperatur vorherrscht als an den zu messenden Lagern. Deshalb wird in so einem Bereich die Sensorleitung durch eine normale isolierte elektrische Leitung ersetzt. Diese hat dann lediglich eine Übertragungsfunktion, aber keine Aufnahmefunktion für Temperatur- oder Feuchtigkeitswerte.

In der Zeichnung ist ein Ausführungsbeispiel der Erfindung dargestellt und wird im folgenden näher beschrieben. Als Beispiel findet ein Tauchmotorpumpenaggregat Verwendung, bei dem ein Elektromotor 1 unter Zwischenschaltung eines Getriebes 2 ein Axiallaufrad 3 antreibt. Die einzige Sensorleitung 4 beginnt am Pumpenwellenhauptlager 5, erstreckt sich zum Pumpenwellenhilfslager 6, führt durch den das Getriebe 2 aufnehmenden Raum 7, reicht weiter zum unteren Motorlager 8, dem oberen Motorlager 9 und endet mit den anderen Steuerleitungen 10 in einem zugehörigen Schaltkasten dieses Kreiselpumpenaggregates.

Würde also eines der Lager einen Schaden aufweisen, so würde die dadurch bedingte Erhöhung der Lagertemperatur von der Sensorleitung 4 registriert werden und ein Signal liefern, welches eine Schadensanzeige auslöst. Im Bereich des Stators 11 des Antriebsmotors 1, welcher während des Betriebes eine über der Lagertemperatur liegende Temperatur aufweisen kann, wird die Sensorleitung durch ein isoliertes Kabel 12 ersetzt. Somit wird diese Temperatur oder durch Leistungsschwankungen bedingte Temperaturänderungen innerhalb des Stators nicht erfaßt und Fehlmeldungen ausgeschlossen. Desweiteren spricht diese Sensorleitung an, wenn infolge eines Dichtungsschadens in den Bereich der Lager oder in den Getrieberaum 7 Fördermedium eindringt und damit beispielsweise anstelle einer Ölvorlage eine Wasser-Öl-Emulsion entstehen würde.

Klein, Schanzlin & Becker Aktiengesellschaft

Patentansprüche

1. Kreiselpumpenaggregat, bestehend aus Antriebsmotor und Kreiselpumpe, wobei die Kreiselpumpe mit Sensoren und Anzeigeeinrichtungen für unzulässige Betriebszustände versehen ist, dadurch gekennzeichnet, daß eine einzige, an sich bekannte Sensorleitung für Temperatur- und Feuchtemessung innerhalb des Kreiselpumpenaggregates verlegt ist und nacheinander alle Lagerstellen und/oder Wellendichtungsbereiche berührt.

2. Kreiselpumpenaggregat nach Anspruch 1, dadurch gekennzeichnet, daß im Bereich heißer Zonen die Sensorleitung durch ein isoliertes Kabel ersetzt ist.

0208879

Europäisches
Patentamt

**EUROPÄISCHER RECHERCHENBERICHT**

Nummer der Anmeldung

EP 86 10 7080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | US-A-4 135 401 (LEBRETON)<br>* Spalte 1, Zeile 66 - Spalte 2, Zeile 7; Spalte 2, Zeile 48 - Spalte 3, Zeile 13; Figur 1 *<br>--- | 1 | F 04 D 15/02<br>G 01 K 13/08 |
| A | US-A-2 518 597 (BROOKS)<br>* Spalte 2, Zeilen 28-40; Figur *<br>--- | 1 | |
| A | DE-B-1 060 027 (DAN BERMAN)<br>* Spalte 4, Zeile 61 - Spalte 5, Zeile 28; Figur *<br>--- | 1 | |
| A | FR-A-2 085 061 (BLUM)<br>* Seite 2, Zeilen 10-17; Seite 3, Zeile 7 - Ende; Seite 4, Figur *<br>----- | 1 | |

|  |
|---|
| RECHERCHIERTE SACHGEBIETE (Int. Cl.4) |
| F 04 D 15/00<br>G 01 K 13/00<br>H 02 K 11/00 |

Der vorliegende Recherchenbericht wurde für alle Patentansprüche erstellt.

| Recherchenort<br>DEN HAAG | Abschlußdatum der Recherche<br>27-10-1986 | Prüfer<br>KAPOULAS T. |
|---|---|---|

EPA Form 1503. 03.82

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument